# EUROPEAN PATENT APPLICATION

(11) **EP 0 554 578 A1**
(43) Date of publication of application: **11.08.1993**
(21) Application number: 92200293.6
(22) Date of filing: 31.01.1992
(51) Int. Cl.: F16F 9/02

(54) **Adjustable pillar or gas spring**

(71) Applicant: HOLLAND HELLAS HOLDING B.V., NL-7554 TA Hengelo (NL)
(72) Inventor: Janssen, H.C.J.G., NL-7555 PS Hengelo (NL)
(74) Representative: Louet Feisser, Arnold

(57) **Abstract**

An adjustable pillar, e.g. a gas spring (1), comprising an at least partially medium-filled cylindrical encasing, within which at least two chambers, separated by a partitition, are located. A piston (4), which is axially movable in a sealing manner, is present within said encasing. A piston rod (5) extends outside the encasing and is movable in a sealing manner with respect thereto. A passage (9,10) is provided through said partition, which passage can be closed by a valve (15,16). The valve comprises a valve seat (15) and a valve body (16) co-operating therewith, said valve body being supported on a valve stem (17) extending outside the encasing with one control end and being movable in a sealing manner with respect thereto. The valve seat and the valve body each exhibit rotational symmetry about a common axis and are at least approximately in circular line contact in the closed condition of the valve. Either one of said valve seat and said valve body has an elastically deformable coating.

## Description

A known pillar comprises an at least partially gas-filled cylinder, a piston which is movable therein, dividing said cylinder into two chambers, said piston having a passage interconnecting said chambers. In order to be able to adjust the effective length of the pillar as desired, it may be possible for the passage to be closed. For this purpose use may be made of a valve consisting of a valve seat and a valve body that can be controlled from the outside.

The object of the invention is to provide a pillar of such a design that it will keep functioning adequately, even after a larger number of operating cycles, and yet be of simple construction.

In order to accomplish that objective the invention provides an adjustable pillar, e.g. a gas spring, comprising:
an at least partially medium-filled cylindrical encasing, within which at least two chambers, separated by a partitition, are located;
a piston being axially movable in a sealing manner within said encasing;
a piston rod secured to said piston, said piston rod extending outside the encasing and being movable in a sealing manner with respect to the encasing;
a passage extending through said partition, which passage can be closed by a valve;
said valve comprising a valve seat and a valve body co-operating therewith, said valve body being supported on a valve stem extending outside the encasing with one control end and being movable in a sealing manner with respect to the encasing;
said valve seat and said valve body each exhibiting rotational symmetry about a common axis and at least approximately being in circular line contact in the closed condition of the valve; and
either one of said valve seat and said valve body having an elastically deformable coating.

Due to the configuration according to the invention no heavy demands, which can hardly be realised in practice, need to be made of the "coaxial" tolerance between valve body and valve seat. With the construction according to the invention a complete sealing of the valve, requiring relatively little force, is ensured, also after prolonged use and a large number of operating cycles. This cannot be achieved with existing constructions. Efforts have been made to ensure a good sealing by means of a very small axial tolerance and metal-to-metal contact. It has also been attempted to give the valve body a certain freedom of movement with respect to the valve seat, thus making it possible for the valve to try and find an optimum closing position itself. In practice it has become apparent that such proposals cannot lead to a pillar exhibiting a reliable operation in the long run.

With regard to the above-mentioned line contact it is noted that the valve seat and the valve body may co-operate via valve surfaces directed towards each other, one of said valve surfaces having two surface portions adjoining each other at an angle, and the other valve surface having an elastically deformable coating. For example, the valve surface having the two surface portions adjoining each other at an angle may be made of a strong material, such as steel, which co-operates with the elastically deformable coating of the other valve surface. Also it is possible for the elastically deformable coating to be shaped in such a manner, that it has two valve surface portions adjoining each other at an angle; in that case the elastically deformable coating co-operates with the other valve surface portion, which may be suitably shaped, e.g. substantially conically.

One particular embodiment of the pillar is characterized in that the partition between the two chambers is formed by the piston.

This embodiment may have the special feature of the valve stem extending in a sealing manner through a channel provided in the piston rod.

The adjustable pillar according to the invention may be constructed in such a manner that the two chambers are at least partially filled with a compressible medium, in particular a gas. In that case an elastic variation around the adjusted length will remain possible at all times.

Another embodiment of the pillar is characterized by an auxiliary piston, which is freely axially movable in a sealing manner within the cylinder and which, together with the cylinder and an end wall fixedly connected thereto, bounds a third chamber filled with a pressurized gas, said two chambers being filled with a liquid. In this embodiment the length can no longer be varied elastically and the pillar is completely rigidly fixed at the adjusted length.

In both the above embodiments, i.e. in the elastic pillar as well as in the rigid pillar, the pressurized medium present can force the pillar into the largest possible length in the manner known of a gas spring. This variation of the length is blocked by the closing of the valve consisting of the valve seat and the valve body capable of being controlled from the outside. It will be apparent that preferably the valve functions as a non-return valve, which closes under the influence of the pressure exerted by the medium. A pressure force exerted on the pillar from the outside assists in the closing of the valve.

In principle the pillar might also be constructed in such a manner that the valve is provided at the other side of the passage and is not a non-return valve, therefore, but is to be maintained in its closed position by an external operating force.

One specific embodiment of the pillar is characterized in that the valve surface consisting of the two valve surface portions is made of a hard material, e.g. steel, and that the elastically deformable coating consists of a wear-resistant material, which can stand up to a high local contact pressure.

Preferably this pillar is characterized in that said coating consists of Vulcalon. Vulcalon is a trademark of Bayer, Leverkusen, Germany. Meanwhile extensive testing has confirmed that Vulcalon is indeed quite suitable for the purpose indicated.

One particular embodiment of the pillar according to the invention is characterized in that the piston rod co-operates with the cylinder so as to provide a seal, said sealing comprising a package of rings consisting of (a) spacing ring(s) alternating with (a) sealing ring(s) of an elastically deformable, wear-resistant material, which radially project(s) inwardly within said spacing ring.

This embodiment is preferably characterized in that said spacing ring(s) is (are) made of Vulcalon.

As an alternative or in combination with the above the pillar may be characterized in that the valve stem co-operates with the piston rod via a sealing, said sealing comprising a package of rings consisting of (a) spacing ring(s) alternating with (a) sealing ring(s) of an elastically deformable, wear-resistant material, which radially project(s) within said spacing ring.

Also here the pillar may be characterized in that said sealing ring(s) are made of Vulcalon.

The invention will be explained in more detail hereafter, with reference to the accompanying drawing. In the drawing:
- Figure 1: shows a cross-section of a gas spring according to the invention;
- Figure 2: shows the detail II of Figure 1;
- Figure 3: shows a detail, corresponding with Figure 2, of an alternative embodiment;
- Figure 4: shows the detail IV of Figure 1;
- Figure 5: shows the detail V of Figure 1;
- Figure 6: shows a further embodiment; and
- Figure 7: shows the detail VII of Figure 6.

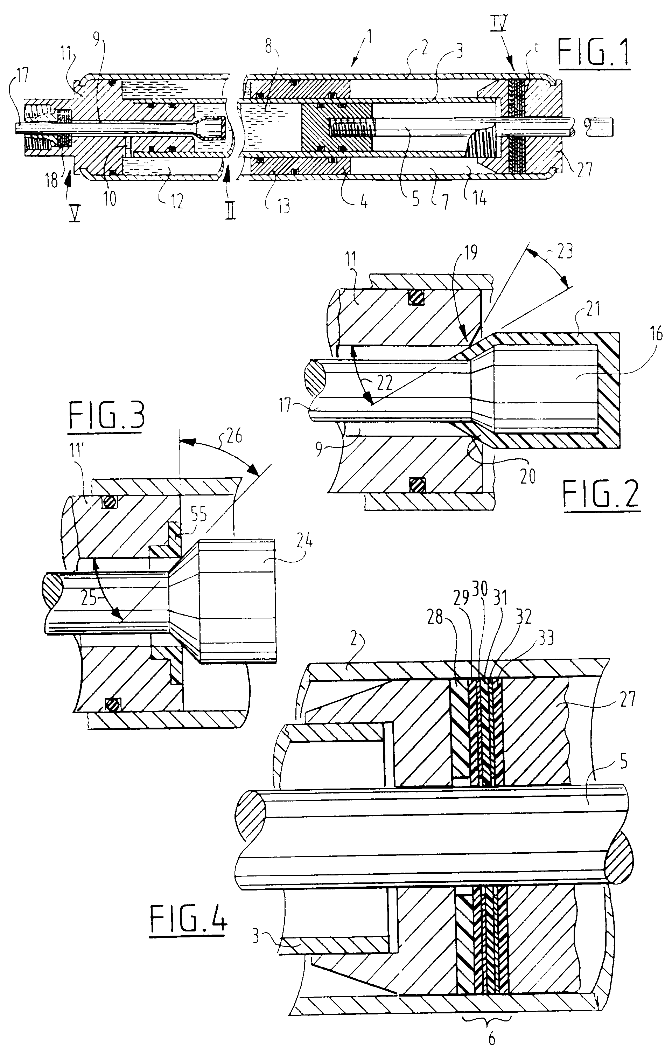

Figure 1 shows a gas spring 1. Said gas spring comprises an outer cylinder 2 and an inner cylinder 3. A piston 4 is movable in a sealing manner within the inner cylinder. The piston 4 supports a piston rod 5, which seals the first chamber 7 of the inner cylinder 3 via a sealing 6.

The second chamber 8 of the inner cylinder 3 located at the other side of the piston 4 is in communication with a first chamber 12 of the outer cylinder 2 via a channel 9 and a channel 10 in an end wall block 11, a piston 13 being movable in a sealing manner between the outer cylinder 2 and the inner cylinder 3. A second chamber 14 is located at the other side of the piston 13.

In the present embodiment the first chamber 7 of the inner cylinder 3 and the second chamber 14 of the outer cylinder 2 are filled with nitrogen. The second chamber 8 of the inner cylinder 3 and the first chamber of the outer cylinder 2 are filled with oil.

As is shown in Figure 2 the end wall block 11 supports a valve seat 15, which may co-operate with a valve body 16 to be described hereafter. Said valve body 16 is supported on a valve stem 17, a control part of which extends outside the gas spring 1. The valve 17 is carried through a seal 18 in a sealing manner. Upon closing of the valve 15, 16, in the situation according to Figure 2, therefore, the chambers 8 and 12 are not in open communication with each other, and consequently the gas spring is blocked up. As a result of the incompressible character of the oil present in the spaces 8, 9, 10, 12 the gas spring is entirely rigidly fixed at its selected length. In order to maintain the spring character it will be possible to leave out the oil and utilize a pressurized medium, e.g. nitrogen.

The valve seat 15 is made in the shape of a bevelled edge having a conical surface with an acute-angled sealing edge 19. Said acute-angled sealing edge 19 co-operates in a sealing manner with a conical coating portion 20, said coating portion forming part of a coating 21 consisting of the aforesaid Vulcalon. Reference numerals 22 and 23 indicate the angles formed by the surfaces of the steel end wall block 11 adjoining each other at the sealing edge 19 and the conical coating portion 20. In this embodiment said angles are in the order of 30°.

It is noted that Figure 1 does not show that use may be made, in a manner known per se, of external spring means, with which the valve stem 17 can be forced towards the outside with respect to the gas spring, as a result of which the valve 15, 16 is always closed when in condition of rest.

Figure 3 shows an alternative, wherein a valve body 24 is made of steel and wherein a rotationally symmetric recess is provided in the end wall block 11', in which a Vulcalon sealing ring 55 is provided. The angles 25, 26 are about 45° in this embodiment.

Figure 4 shows the manner in which the piston rod 5 is carried through the right-hand end wall block 27 in a sealing manner. The seal 6, which is illustrated on a larger scale in this Figure, respectively comprises a PVC-ring 28, a Vulcalon ring 29, a steel ring 30, a Vulcalon ring 31, a steel ring 32 and a Vulcalon ring 33.

The Vulcalon rings 29, 31, 33 have an inner diameter which is dimensioned in such a manner with respect to the inside diameter of the valve stem 6, that said rings can co-operate with said valve stem so as to form a seal.

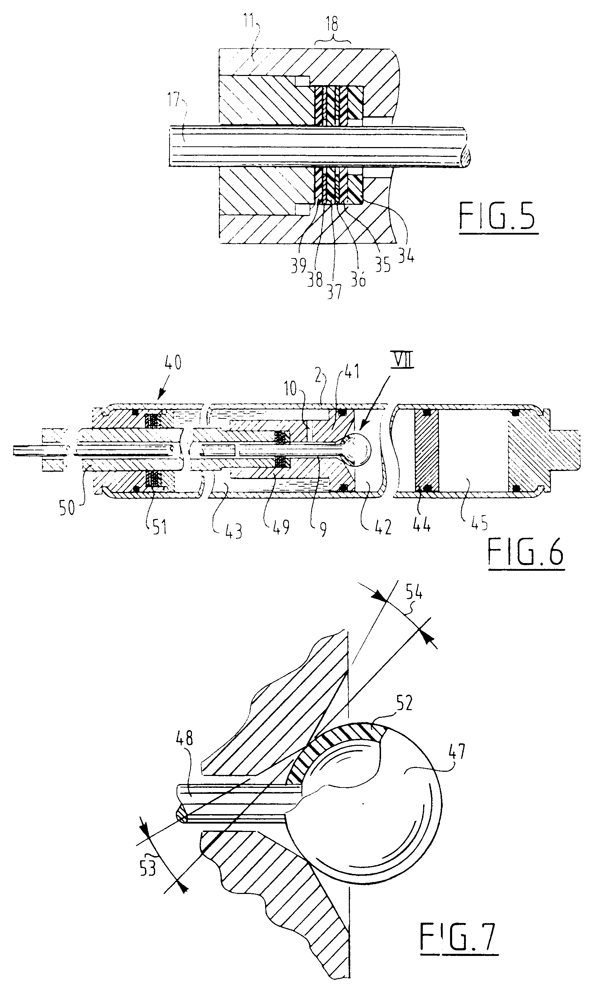

Figure 5 shows a similar construction guiding the valve stem 17 in the end wall block 11 so as to form a seal. Also in this case the seal consists of a package of rings, respectively consisting of a PVC-ring 34, a Vulcalon ring 35, a steel ring 36, a Vulcalon ring 37, a steel ring 38 and a Vulcalon ring 39.

Figure 6 shows a variant not utilizing two co-axial cylinders 2, 3, but only the outer cylinder 2. The internal structure of this gas spring 40 differs from that of the gas spring 1, however.

In this embodiment a piston 41 is provided with the channel 9 and the channel 10, which interconnects a first chamber 42 and a second chamber 43. The piston 41 separates the first chamber 42 from the second chamber 43. A freely movable auxiliary piston 44 movably co-operates with the cylinder 2 so as to form a seal and separates the first chamber 42 from a third chamber 45.

The piston 41 supports a valve seat 46, which co-operates with a valve body 47. The valve body 47 is supported on a valve stem 48, which is carried outside via a seal 49 in accordance with the seal 18 so as to be controlled. The valve stem 9 extends through a piston rod 50 supporting the piston 41. Via a seal 51 having the same basic structure as the seal 6 the piston rod is carried outside in a sealing manner.

In this embodiment the valve body 47 is spherical in shape and coated with a spherical Vulcalon coating 52. Reference numerals 53, 54 indicate the angles at which the contact surfaces of the valve 46, 47 co-operate with each other.

It will be apparent that various other embodiments of the principle according to the invention are possible. In particular Figures 2, 3 and 7 show only a few possible embodiments of a valve according to the invention. All embodiments, however, have as a common feature that their construction is such that the coating 21, 24, 52 is at no time subjected to a local pressure of such a magnitude that there would be a risk of the coating being damaged.

As already said before, in all embodiments it is furthermore possible for the spring to be filled with oil, so as to achieve a rigid, adjustable pillar, or with gas, as desired, as a result of which the gas spring can retain its spring properties.

## Claims

1. An adjustable pillar, e.g. a gas spring, comprising:
an at least partially medium-filled cylindrical encasing, within which at least two chambers, separated by a partitition, are located;
a piston being axially movable in a sealing manner within said encasing;
a piston rod secured to said piston, said piston rod extending outside the encasing and being movable in a sealing manner with respect to the encasing;
a passage extending through said partition, which passage can be closed by a valve;
said valve comprising a valve seat and a valve body co-operating therewith, said valve body being supported on a valve stem extending outside the encasing with one control end and being movable in a sealing manner with respect to the encasing;
said valve seat and said valve body each exhibiting rotational symmetry about a common axis and being at least approximately in circular line contact in the closed condition of the valve; and
either one of said valve seat and said valve body having an elastically deformable coating.

2. A pillar according to claim 1, characterized in that that the partition between the two chambers is formed by the piston.

3. A pillar according to claim 2, characterized in that the valve stem extends in a sealing manner through a channel provided in the piston rod.

4. A pillar according to claim 1, characterized by an auxiliary piston, which is freely axially movable in a sealing manner within the cylinder and which, together with the cylinder and an end wall fixedly connected thereto, bounds a third chamber filled with a pressurized gas, said two chambers being filled with a liquid.

5. A pillar according to claim 1, characterized in that a valve surface is made of a hard material, e.g. steel, and that the co-operating elastically deformable coating consists of a wear-resistant material, which can stand up to a high local contact pressure.

6. A pillar according to claim 5, characterized in that said coating consists of Vulcalon.

7. A pillar according to claim 1, characterized in that the piston rod co-operates with the cylinder so as to provide a seal, said sealing comprising a package of rings consisting of (a) spacing ring(s) alternating with (a) sealing ring(s) of an elastically deformable, wear-resistant material, which radially project(s) inwardly within said spacing ring.

8. A pillar according to claim 7, characterized in that said each sealing ring is made of Vulcalon.

9. A pillar according to claim 1, characterized in that the valve stem co-operates with the piston rod via a sealing, said sealing comprising a package of rings consisting of (a) spacing ring(s) alternating with (a) sealing ring(s) of an elastically deformable, wear-resistant material, which radially project(s) within said spacing ring.

10. A pillar according to claim 6, characterized in that said sealing ring or each sealing ring is made of Vulcalon.
